# EUROPEAN PATENT APPLICATION

(11) **EP 2 464 104 A2**
(43) Date of publication of application: **13.06.2012**
(21) Application number: 11189981.1
(22) Date of filing: 21.11.2011
(51) Int. Cl.: H04N 5/57

(54) **Image Processing Apparatus And User Interface Providing Method Thereof**

(30) Priority: 13.12.2010 KR 20100126951
(71) Applicant: Samsung Electronics Co., Ltd., Suwon-si, Gyeonggi-do 442-742 (KR)
(72) Inventor: Pyo, Se-jin, Gyeonggi-do (KR)
(74) Representative: Clark, David James

(57) **Abstract**

An image processing apparatus, including a first input unit, receives a first image signal. A second input unit receives a second image signal. A user interface unit receives a user command for adjusting an image quality of the first image signal and the second image signal. An image processing unit generates a reference image frame which consists of the first image signal and the second image signal according to a user command. A display unit displays the generated reference image frame on a monitor screen. Additionally, a control unit adjusts the image quality of the second image signal based on the first image signal, which constitutes the generated reference image frame, and the control unit controls the image processing unit in order to display the reference image frame, on which the result of the image quality adjustment is reflected.

## Description

### BACKGROUND

### Field

Apparatuses and methods consistent with the exemplary embodiments relate to an image processing apparatus and a user interface (UI) providing a method of image processing. In particular, the exemplary embodiments relate to an image processing apparatus receiving a plurality of image signals and a UI providing method thereof.

### 2. Description of the Related Art

Recent TV broadcasting, particularly digital broadcasting, includes the functions of displaying information on a broadcast program, providing data other than audio/visual information on an Electronic Program Guide (EPG) picture, and notifying a user regarding program information.

As digital broadcasting continues to develop, television receivers are being developed to include more complex and diverse functions, in order for users to receive high-definition broadcasts.

In particular, an external input function receiving diverse external input signals is a representative example of the above diverse functions.

Thus, recently released broadcasting receivers receive the same images in diverse manners. For example, a national broadcasting image may be received via a tuner, a cable broadcasting image may be received via a tuner, a HDMI or a component broadcasting image may be received via a set-top box, and a HDMI or a component broadcasting image may be received via a PC in diverse manners, and displayed on a display.

A problem with this conventional technology is that the same images are displayed with different image qualities to a viewer, as a result of the diverse input methods.

In addition, it is not easy for a user to adjust for differences in picture quality caused by the input methods, via an image quality adjustment of a receiver.

### SUMMARY

Exemplary embodiments address at least the above problems and/or disadvantages, and other disadvantages not described above. Also, the present invention is not required to overcome the disadvantages described above, and an exemplary embodiment of the present invention may not overcome any of the problems described above.

To address the above problem, exemplary embodiments provide an image processing apparatus which is capable of providing image adjustment of pictures received from different input methods. Additionally provided is a UI providing a method of image processing.

According to an exemplary aspect, there is provided an image processing apparatus, comprising a first input unit which receives a first image signal; a second input unit which receives a second image signal; a user interface unit which receives a user command for adjusting an image quality of the first image signal or the second image signal; an image processing unit which generates a reference image frame which includes a first image signal and a second image signal according to the user command; a display unit which displays the generated reference image frame on a monitor screen; and a control unit which adjusts the image quality of the second image signal based on the first image signal to generate a reference image frame, and the control unit controls the image processing unit in order to display a reference image frame, which reflects the result of the image quality adjustment.

The first image signal and the second image signal may be same image signals, but which are input through diverse inputs.

The image processing unit, according to the user command, comprises an image selecting unit which selects at least one first image frame from among image frames which constitute the first image signal, and selects a second image frame, which is the same as the selected image frame, from among image frames which constitute the second image signal, and an image connecting unit which connects the first image frame and the second image frame, thereby generating a reference image frame, according to a user command.

In this situation, the image connecting unit may connect a first area of the first image frame and a second area, which excludes a same image area, with a first area of the second image frame, thereby generating the reference image frame.

Additionally, the apparatus further comprises a storing unit (not shown) which captures and stores a predetermined number of image frames from among a plurality of image frames which constitute the first image signal, according to a user command, wherein the control unit may select the first image frame from among the stored image frames and control selection of the second image frame, which is the same as the selected first image frame, from among image frames which constitute the second image signal.

The first image signal may be a broadcast stream image signal which may be input from a tuner and the second image signal is an image signal from an external input.

The control unit may adjust the image quality of the second image signal so that the image quality of the first image signal may be the same as the image quality of the second image signal.

A method of providing a UI for an image processing apparatus provides a first input unit which receives a first image signal and a second input unit which receives a second image signal. The method including the steps of receiving a user command for adjusting the first image signal or the second image signal; generating the reference image frame which includes the first image signal and the second image signal according to the user command, displaying the generated reference image frame on a monitor screen; and a step of adjusting the image quality of the second image signal based on the first image signal, which constitutes the generated reference image frame, and displaying the reference image frame which reflects a result of the image quality adjustment.

The first image signal and the second image signal may be same image signals, which are input in diverse manners.

The method further includes a step of generating the reference image frame which may include a step of selecting at least one first image frame from among image frames which constitute the first image signal, and selecting a second image frame, which is the same as the selected image frame from among image frames which constitute the second image signal, according to a user command; and a step of connecting the first image frame and the second image frame, thereby generating a reference image frame.

The step which generates the reference image frame may connect a first area of the first image frame and the second area, of the second image frame which excludes the image area which is the same as the first area, thereby generating a reference image frame.

The method further includes a step which captures and stores a predetermined number of image frames from among a plurality of image frames which constitute the first image signal according to a user command, wherein the image frame capturing and storing step may select a first image frame from among the stored image frames and capture the second image frame, which is the same as the selected first image frame, from among image frames which constitute the second image signal.

The first image signal may be a broadcast stream image signal which is input from a tuner and the second image signal may be an image signal which is externally input.

The image quality adjustment step may adjust the image quality of the second image signal so that the image quality of the first image signal may be the same as the image quality of the second image signal.

Accordingly, a user may watch the same images with the same image qualities, regardless of the method of inputting the image signals.

In addition, the user may set the image quality to be the same for image signals input by different methods to be the same intuitionally.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the exemplary embodiments will be more apparent by describing certain exemplary embodiments with reference to the accompanying drawings, in which:
FIG. 1 is a block diagram showing a composition of an image processing apparatus according to an exemplary embodiment;
FIG. 2 is a is a block diagram showing a composition of an image processing apparatus according to another exemplary embodiment;
FIGS. 3A to 3C are diagrams for comparing image quality differences according to a same image signal input according to diverse input methods;
FIGS. 4A to 4B are diagrams for describing a UI providing a method of image processing according to an exemplary embodiment;
FIGS. 5A to 5B are diagrams for describing a UI for providing a method of image processing according to another exemplary embodiment; and
FIG. 6 is a flowchart for describing a UI, for providing a method of image processing of an image processing apparatus according to an exemplary embodiment.

### DETAILED DESCRIPTION OF THE EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the invention with unnecessary detail.

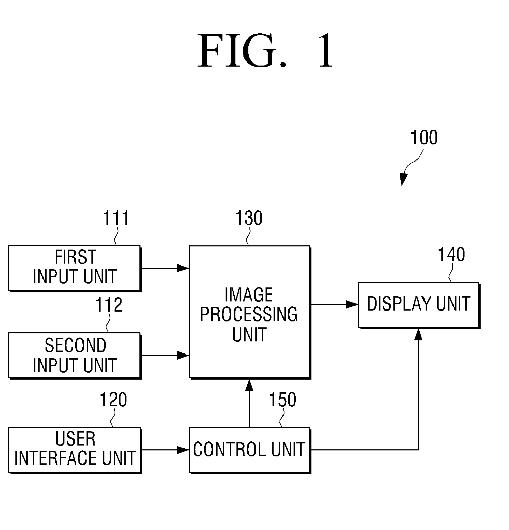

FIG. 1 is a block diagram showing a composition of an image processing apparatus according to an exemplary embodiment.

According to FIG. 1, image processing apparatus 100 according to an exemplary embodiment includes a first input unit 111, a second input unit 112, a user interface unit 120, an image processing unit 130, a display unit 140, and a control unit 150.

Image processing apparatus 100 may be realized by diverse types of inputs. For example, image processing apparatus 100 may be realized in a portable terminal including a mobile phone, a smart phone, a notebook computer, a digital broadcasting device, a Personal Digital Assistants, a Portable Multimedia Player, and a navigation and a fixed terminal including a digital TV and a desktop computer. However, for convenience of description, image processing apparatus 100 will be assumed and designated as a digital TV in the following description.

The first and second input units, 111 and 112, receive a first image signal and a second image signal.

Specifically, the first and the second input units, 111 and 112, may receive image signals which are provided to a tuner, a set-top box, and a PC.

For example, the first image signal and the second image signal may be diverse image signals including a national broadcast image via a tuner, a cable broadcasting image via a tuner, a HDMI or a component broadcasting image via a set-top box, a HDMI or a component image via a PC, and a DVD image.

A user interface unit 120 receives and interprets a user command input from the user via an input apparatus including a key pad, a dome switch, a touch pad (constant voltage/constant current), a JOG wheel, a JOG switch, a one/two way remote control, a mouse, etc. Specifically, if a touch pad forms a mutual layer construction with display unit 140, which will be described later, it may be considered to be a touch screen.

In particular, user interface unit 120 receives at least one user command between the first image signal and the second image signal, for purposes of image adjustment.

Additionally, user interface unit 120 may receive diverse user commands for controlling operations of image processing unit 100.

Image processing unit 130 provides signal processing of the first image signal and the second image signal, which are input via first input unit 111 and second input unit 112.

Specifically, image processing unit 130 may perform image processing including demultiplexing, decoding, and scaling.

In addition, image processing unit 130 may adjust the image quality of the second image signal based on the first image signal, according to a user command input from user interface unit 120.

Specifically, according to control unit 150, which will be described later, image processing unit 130 may adjust an image quality of the second image signal so that the image quality of the first image signal and the image quality of the second image signal may be the same for both images. Components of the image quality adjustment may include brightness, contrast and a color.

For example, image processing unit 130 may generate a reference image frame which consists of the first image signal and the second image signal for the purpose of adjusting an image quality. In addition, image processing unit 130 may adjust an image quality of the generated reference image frame.

Display unit 140 displays an image processed in image processing unit 130. Further, display unit 140 may display diverse data objects generated from image processing apparatus 100.

In addition, display unit 150 may display a reference image frame generated from image processing unit 130.

Display unit 140 may be realized as at least one display among a liquid crystal display, a thin film transistor-liquid crystal display, an organic light-emitting diode, a flexible display, and a 3D display. In addition, display unit 150 may include more than two displays. For example, in the situation where image processing apparatus 100 provides the PIP function, a display on the main image and a display of the PIP image may be provided at the same time.

Specifically, display unit 140 may be realized in a touch screen type which has a mutual layer structure with a touch pad. In this situation, other than being an output apparatus, display unit 140 may be used as a user interface unit 120, which will be described later. Additionally, a touch screen may be constituted to detect not only a location and area of a touch input, but may also detect the pressure of a touch input.

Control unit 150 controls overall operations of image processing apparatus 100.

In addition, control unit 150 may adjust the image quality of the second image signal based on the first image signal.

Specifically, control unit 150 may adjust the image quality of the second image signal so that the image quality of the first image signal and the image quality of the second image signal may be the same.

For example, control unit 150 may control, according to a user command, image processing unit 130 in order to adjust the image quality of at least one image frame constituting the second image signal, based on at least one image frame constituting the first image signal.

Specifically, control unit 150 may adjust the image quality of the second image signal based on the image quality of the first image signal, so that the image quality of the first image signal and the second image signal, which constitute the reference image frame generated from image processing unit 130, may be the same. Control unit 150 may control a relevant block of an image so that a reference image frame, on which the result of the image quality adjustment may be displayed.

Specifically, control unit 150 may select at least a first image frame from among image frames constituting the first image signal, select a second image frame which is the same as the selected first image frame from among the image frames constituting the second image signal, thereby generating the reference image frame. Control unit 150 may adjust the image quality of the second image frame, so that the image quality of the first image frame and the image quality of the second image frame, constituting the generated reference image frame, may have the same quality.

In addition, control unit 150 may adjust the image quality of the second image signal based on an image quality adjustment parameter which is reflected in the image quality adjustment of the reference image frame.

Furthermore, control unit 150 may respectively display on the main picture and the PIP, the first image frame and the second image frame selected from image processing unit 130.

A PIP (picture in picture) is a picture having a function of displaying a main picture along with a separate small picture on a monitor screen of a television receiver, at the same time, and is similar to a window of a personal computer (PC). In the situation of a television having this function, a background area of a monitor screen is called the main picture and the small picture is called a PIP. By using this function, it may be possible to watch, at the same time, a TV program along with another program in the PIP.

Therefore, control unit 150 may provide control in order to display an adjustment image which requires image quality adjustment on the main picture and may display a reference image which is used for referencing image quality adjustment of the adjustment image on the small picture. In addition, the reverse situation is also possible.

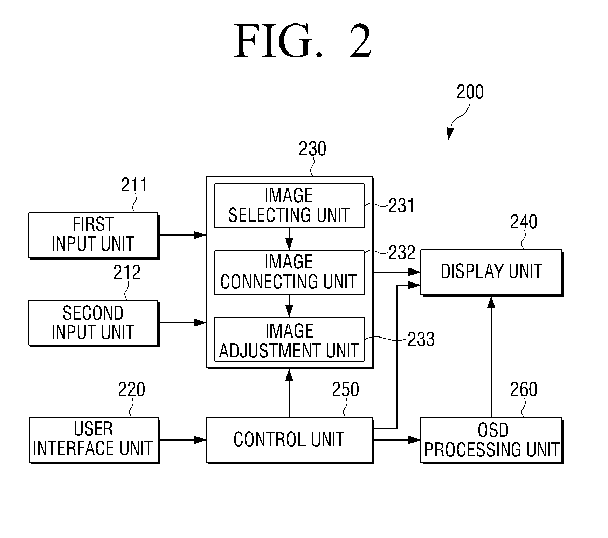

FIG. 2 is a block diagram showing a composition of the image processing apparatus according to another exemplary embodiment.

According to FIG. 2, the image processing apparatus 200 comprises a first input unit 211, a second input unit 212, a user interface unit 220, an image processing unit 230, a display unit 240, a control unit 250, and an OSD processing unit 260, according to another exemplary embodiment. The detailed description of overlapping components between the components illustrated in FIG. 2 and the components illustrated in FIG. 1, will be omitted.

As illustrated in FIG. 2, image processing unit 230 may comprise an image selecting unit 231, an image connecting unit 232, and an image adjustment unit 233.

Image selecting unit 231 may select at least a first image frame from among the image frames constituting the first image signal, and may select a second image frame, which is the same as the selected image frame, from among image frames constituting the second image signal.

Image connecting unit 232 generates one reference image frame by connecting the first image frame and the second image frame, which were selected by image selecting unit 231.

Specifically, image connecting unit 232 may generate one reference image frame by connecting a first area of the first image frame and a second area, of a second image frame which excludes an image area which is the same as the first image area of the first image frame.

For example, image connecting unit 232 may generate one reference image frame by connecting a left 1/2 area of the first image frame and a right 1/2 area of the second image frame. The generated reference image frame may include the left 1/2 area of the first image frame and the right 1/2 area of the second image frame. However, this is only an exemplary aspect and the reference image frame may be constituted by combining a relevant area of the first image frame and the second image frame, in diverse manners.

Image adjustment unit 233 adjusts the image quality of the connected reference image frame so that both parts of the reference image have the same quality. For example, image adjustment unit 233 may adjust an image quality of the first image frame and the second image frame so that the left 1/2 area of the first image frame or the right 1/2 area of the second image frame may have the equal image quality as to the other 1/2 area of the reference image frame.

Specifically, image adjustment unit 233 may adjust the image quality of the adjustment image by selecting the image from one image frame as a reference image and selecting an image from the other image frame as an adjustment image, between the first image frame and the second image frame which constitute the reference image frame. The reference image and the adjustment image may be selected by a user. If the two images are selected, the predetermined image (for example, a broadcasting stream image input via a tuner unit) may be the reference image and the other image may be the adjustment image. Generally, since the broadcast stream image input via the tuner is a little bit faster than an external input image input via an external apparatus such as a PC, the broadcast stream image may be used as a reference image.

In this situation, control unit 250 may control image processing unit 230 so that the image qualities of the relevant image signal and the reference image frame are the same, by using an image adjustment parameter applied to the image adjustment of the reference image frame.

In this situation, display unit 240 may display one reference image frame generated from image connecting unit 232.

In the following description, an example of image quality adjustment of an external apparatus image signal will be described, based on the broadcast stream image signal, which is input via the tuner.

Control unit 250 may store a predetermined number of image frames from among a plurality of image frames, which constitute the broadcast stream image signal.

In addition, control unit 250 may select the reference image frame from among the stored image frames which are stored in a storing unit (not illustrated), in order to capture from among the image frames constituting the external apparatus image signal, the adjustment image frame which is the same as the selected reference image frame.

Furthermore, control unit 250 may constitute one reference image frame by connecting the selected reference image frame and the captured adjustment image frame and adjust the image quality, in order to provide the same image quality of the constituted image frame.

OSD processing unit 260 processes all sorts of OSD elements displayed on the reference image frame output on display unit 240.

For example, OSD processing unit 260 may process an element which may differentiate between a reference image and an adjustment image, elements which indicate an adjustment start state, a progress state, an end state, as well as image overlap, and will display the elements on the reference image frame.

In addition, OSD processing unit 260 may process a picture displaying characters or figures, including a menu picture, a warning sign, time, or channel numbers.

For example, in order for a user to select a preference function from the menus, OSD processing unit 260 controls input apparatuses, including a control panel or a remote controller.

Furthermore, OSD processing unit 260 may perform works including 2D/3D change and adjustment of the degree of clearness, color, size, shape and location of the OSD element, as well as provide highlight and animation effects, according to an input from control unit 250.

The storing unit (not illustrated) is a storing medium where various sorts of programs needed to operate the image processing apparatus 200 and may be realized in a memory and a HDD (Hard Disk Drive). For example, the storing unit may provide a ROM for storing a program for operating control unit 250, as well as a RAM for storing data temporarily according to an operation of control unit 250, and may further provide an EEROM (Electrically Erasable and Programmable ROM) for storing various types of reference data.

The storing unit (not illustrated) may capture and store the predetermined number of image frames among the plurality of image frames constituting the first image signal, in order to adjust the image quality of the second image signal in response to a user command. An interval between image frames and the number of the image frames may be set up in diverse manners, according to the performance and realization conditions of an image processing apparatus.

In addition, the user may designate a size of an image which the user wants to capture and may select usable memory capacity, according to the size and the capturable number of pictures, depending on the conditions of transfer. Furthermore, it may be possible to set the manner in which to store and transfer data, as well as setting the format for image storage in the situation where diverse image formats are supported.

In this situation, control unit 250 may select the first image frame among the image frames stored in the storing unit (not illustrated) in order to capture the second image frame, which is the same as the selected first image frame from among the image frames constituting the second image frame.

the storing unit may be a external apparatus connected to the image processing apparatus 200, not being included in the image processing apparatus 200.

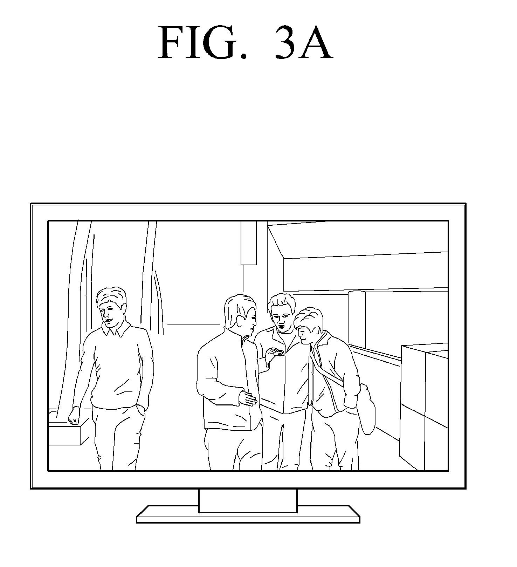

FIGS. 3A to 3C are diagrams to compare the image quality difference according to the same image signal via diverse input methods.

According to FIGS. 3A to 3C, the image processing apparatus may receive the same image signal through diverse input methods. The image signal may be displayed in a different picture, according to the method by which the image signal was input to the image processing apparatus.

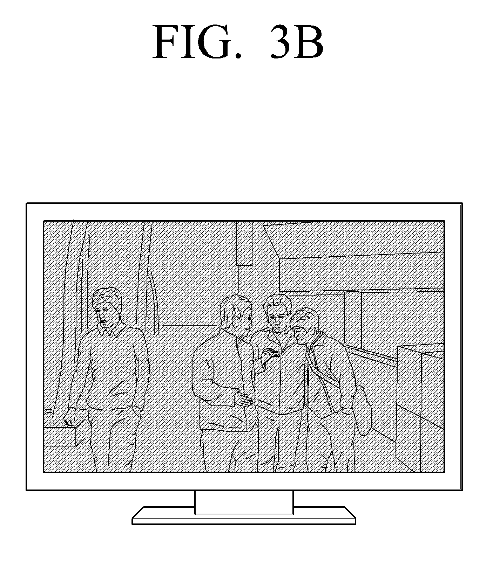

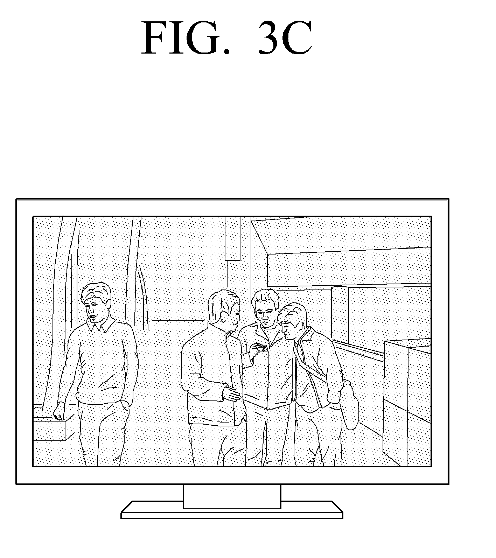

For example, the image displayed in FIG. 3A may represent an image input via a tuner. FIGS. 3B and 3C may represent external images input via a set-top box and a PC respectively.

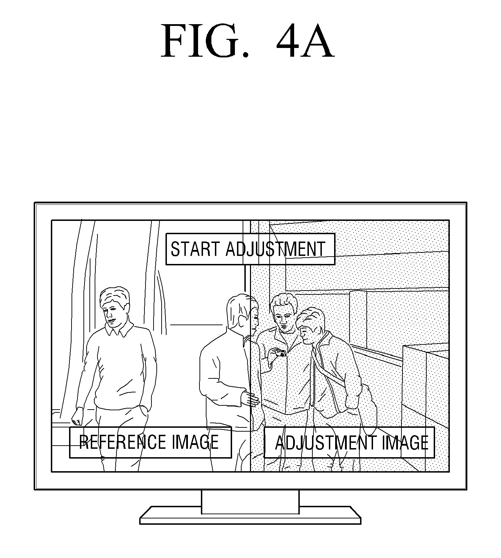

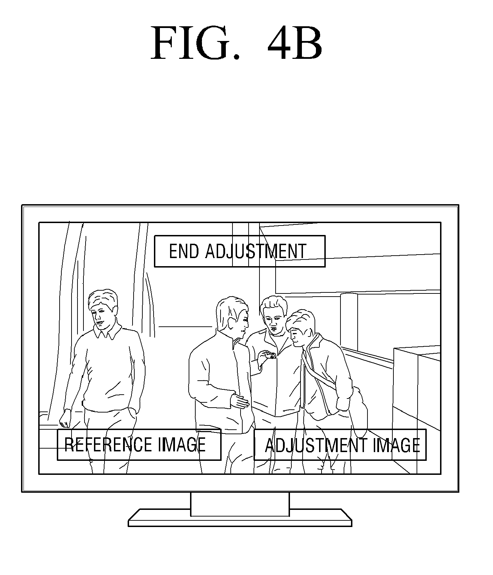

FIGS. 4A and 4B are diagrams used to describe a method of providing a UI according to an exemplary embodiment.

According to FIG. 4A, the reference images, which consist of the reference image and the adjustment image, may be displayed on a monitor screen. Image quality adjustment may be carried out, in order that the image quality of the adjustment image is adjusted to be the same as the image quality of the reference image. This operation may be provided as the UI as illustrated in FIG. 4A where a user may check the image quality both before and after the image quality adjustment of the reference image and adjustment image. As illustrated in FIG 4A, for example, the reference image may be a real time broadcast stream image input via a tuner unit, and the adjustment image may be an external input image via a PC, where the external input image is the same image as the reference image.

According to FIG. 4B, the image quality adjustment may be carried out so that the image quality of the adjustment image may be the same as the image quality of the reference image. The result of the image quality adjustment may be displayed in order for a user to check the result of the image quality adjustment.

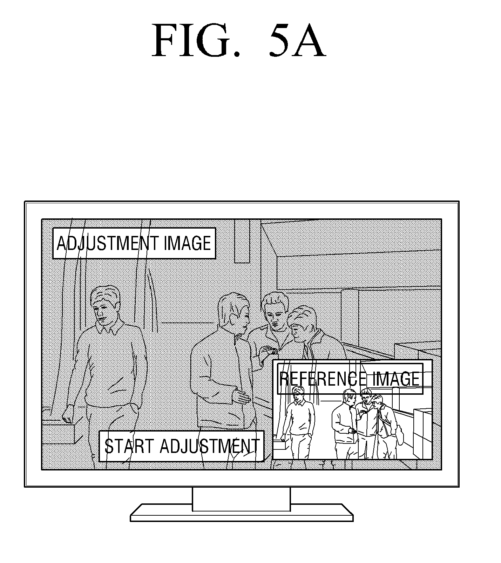

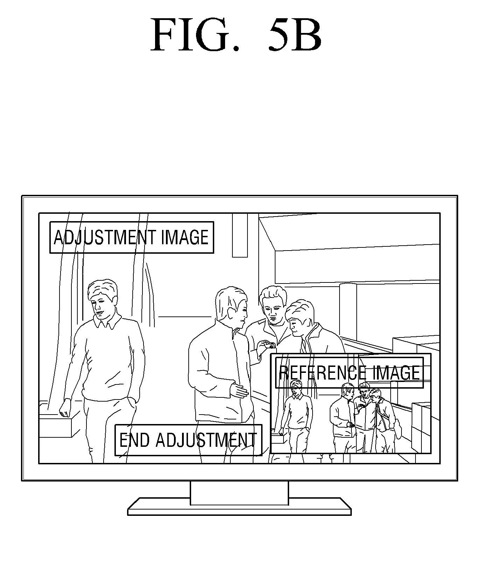

FIGS. 5A and 5B are diagrams describing the method of adjusting an image using a UI, according to another exemplary embodiment.

According to FIG. 5A, the reference image may be displayed on the PIP, the adjustment image may be displayed on the main picture, and the image quality adjustment may be carried out in order that the image quality of the adjustment image may be equal to the image quality of the reference image. This operation may be provided as a UI, as illustrated in FIG. 5A, in order for a user to check the image quality both before and after image quality adjustment of the reference image and the adjustment image.

According to FIG. 5B, the image quality adjustment may be carried out in order for the image quality of the adjustment image to be the same as the image quality of the reference image. The result of the image quality adjustment may be displayed in order for the user to be able to check the result of the image quality adjustment.

However, in the exemplary embodiments, even though the image quality adjustment of the external input image is described based on a real time broadcast stream image input via the tuner, this is only an exemplary embodiment and it may be apparent to those skilled in the related art that it is possible that the image quality adjustment of other external input images, to make the adjusted images of equal quality, can be based on the external input image.

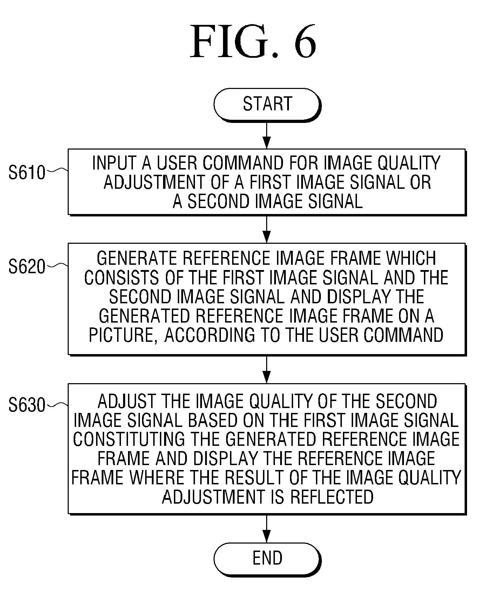

FIG. 6 is a flowchart describing a method of using a UI to provide image processing according to an exemplary embodiment.

The method of using a UI to provide image processing, provides a first input unit receiving a first image signal and the second input unit receiving a second image signal. According to FIG. 6, a user command (S61 0) is received for adjusting the image quality of the first or the second image signal. In this situation, the first image signal and the second image signal may be diverse image signals including a cable broadcasting image via a tuner, a HDMI or a component broadcasting image via a set-top box, a HDMI or a component image via a PC, and a DVD image.

The reference image frame which consists of the first image signal and the second image signal is generated and the generated reference image frame is displayed on the monitor screen.

The image quality of the second image signal may be adjusted based on the first image signal constituting the generated reference image frame, and the reference image frame on which the result of the image quality adjustment is reflected, may be displayed (S630). Specifically, the image quality of the second image signal may be adjusted so that the image quality of the first image signal and the image quality of the second image signal may be the same.

The first image signal and the second image signal may be the same image signal. For example, the first image signal may be a broadcast stream image signal received via a tuner and the second image signal may be an externally input image signal (for example: an internet broadcast) where the first and second image signals are the same.

The reference image frame generation step (S620) may select at least one first image frame from among the image frames constituting the first image signal, and may select the second image frame which is the same as the selected image frame among the image frames constituting the second image frame. Then, the first image frame and the second image frame may be connected, thereby generating a reference image frame.

In addition, reference image frame generation step (S620) may connect a first area of a first image frame and a second area of the second image frame excluding the image area of the second image frame which is the same as the first area, thereby generating a reference image frame.

Furthermore, the predetermined number of the image frames among the plurality of the image frames constituting the first image signal may be captured and stored, according to a user command.

In this situation, the first image frame may be selected from among the stored image frames, and the second image frame, which is the same as the selected first image frame, may be selected from among the image frames constituting the second image signal.

The method of providing for image adjustment, according to another exemplary embodiment may select according to a user command, at least one first image frame from among image frames constituting a first image signal, and may select a second image frame which is the same as the selected image frame, from among the selected image frames constituting the second image signal.

The selected first image frame and the selected second image frame may be respectively displayed on the main picture and the PIP.

The displayed image quality of the first image frame and the displayed image quality of the second image frame may be adjusted to be the same and the adjusted first image frame and the adjusted second image frame may be respectively displayed on the main picture and the PIP.

In the exemplary embodiments, the situation where the input signals are two is assumed and described. However, this is only for convenience of description and it is apparent to those skilled in the related art that the input signals may number more than three.

The user may watch the same image with the same image quality regardless of the method of inputting the image signal.

In addition, a user may intuitionally set the image quality of the equal image signals that are input via different methods.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus, comprising:
a first input unit which receives a first image signal;
a second input unit which receives a second image signal;
a user interface unit which receives a user command for adjusting an image quality of the first image signal or the second image signal;
an image processing unit which generates a reference image frame which contains the first image signal and the second image signal, according to the user command;
a display unit which displays the generated reference image frame on a screen; and
a control unit which adjusts the image quality of the second image signal based on the first image signal, to control the image processing unit in order to display a reference image frame which reflects the result of the image quality adjustment.

2. The apparatus as claimed in claim 1, wherein the first image signal and the second image signal are same image signals, which are input in diverse manners.

3. The apparatus as claimed in claim 1 or 2, wherein the image processing unit, comprises;
an image selecting unit which selects at least one first image frame among image frames which constitute the first image signal and selects a second image frame which is the same as the selected first image frame, from among image frames which constitute the second image signal, according to the user command; and
an image connecting unit which connects the first image frame and the second image frame, thereby generating the reference image frame, according to the user command.

4. The apparatus as claimed in claim 3, wherein the image connecting unit connects a first area of the first image frame and a second area, which excludes the same image area of the first area of the second image frame, thereby generating the reference image frame.

5. The apparatus as claimed in claim 3 or 4, further comprising:
the apparatus is adapted for connection with a storing unit which captures and stores a predetermined number of image frames from among a plurality of image frames which constitute the first image signal, according to the user command,
wherein the control unit is adapted to select the first image frame among the stored image frames and control the section of the second image frame, which is the same as the selected first image frame among image frames, which constitute the second image signal.

6. The apparatus as claimed in any one of claims 2 to 5, wherein the first image signal is a broadcast stream image signal which is input from a tuner and the second image signal is an externally input image signal.

7. The apparatus as claimed in any one of claims 1 to 6, wherein the control unit adjusts the image quality of the second image signal so that the image quality of the first image signal may be the same as the image quality of the second image signal.

8. The apparatus as claimed in claim 3, further comprising;
a storing unit which captures and stores predetermined number of image frames among a plurality of image frames which constitute the first image signal according to the user command,
wherein the control unit selects the first image frame among the stored image frames and controls to select the second image frame which is the same with the selected first image frame among image frames which constitute the second image signal.

9. A method of providing a UI for an image processing apparatus which provides a first input unit which receives a first image signal and a second input unit which receives a second image signal, the method comprising:
a step which receives a user command for adjusting the first image signal or the second image signal;
a step which generates a reference image frame which contains the first image signal and the second image signal, according to the user command and displays the generated reference image frame on a monitor screen; and
a step which adjusts the image quality of the second image signal based on the first image signal, generates a reference image frame and displays the reference image frame which reflects a result of the image quality adjustment.

10. The method as claimed in claim 9, wherein the first image signal and the second image signal are same image signals, which are input in diverse manners.

11. The method as claimed in claim 9 or 10, wherein a step which generates the reference image frame comprises:
a step which selects at least one first image frame from among image frames which constitute the first image signal and selects the second image frame, which is the same as the selected image frame, from among image frames which constitute the second image signal, according to the user command; and
a step which connects the first image frame and the second image frame, thereby generating the reference image frame.

12. The method as claimed in claim 11, wherein the step which generates the reference image frame connects a first area of the first image frame and a second area, which excludes the image area which is the same as the first area of the second image frame, thereby generating the reference image frame.

13. The apparatus as claimed in claim 11 or 12, further comprising:
a step which captures and stores a predetermined number of image frames from among a plurality of image frames which constitute the first image signal, according to the user command,
wherein the image frame selection step selects the first image frame from among the stored image frames and captures the second image frame, which is the same as the selected first image frame, from among image frames which constitute the second image signal.

14. The method as claimed in any one of claims 10 to 13, wherein the first image signal is a broadcast stream image signal which is input from a tuner and the second image signal is an externally input image signal.

15. The method as claimed in any one of claims 10 to 14, wherein the image quality adjustment step adjusts the image quality of the second image signal so that the image quality of the first image signal may be the same as the image quality of the second image signal.
